# EUROPEAN PATENT APPLICATION

(11) **EP 1 600 948 A1**
(43) Date of publication of application: **30.11.2005**
(21) Application number: 03816164.2
(22) Date of filing: 06.03.2003
(51) Int. Cl.: G11B 5/39

(54) **MAGNETO-RESISTIVE HEAD**

(71) Applicant: FUJITSU LIMITED, Kawasaki-shi, Kanagawa 211-8588 (JP)
(72) Inventor: KONDO, Reiko, C/O FUJITSU LIMITED, Kawasaki-shi, Kanagawa 211-8588 (JP); SHIMIZU, Yutaka, C/O FUJITSU LIMITED, Kawasaki-shi, Kanagawa 211-8588 (JP); TANAKA, Atsushi, C/O FUJITSU LIMITED, Kawasaki-shi, Kanagawa 211-8588 (JP)
(74) Representative: Sunderland, James Harry
(86) International application number: PCT/JP2003/002659
(87) International publication number: WO 2004/079723

(57) **Abstract**

A magnetoresistive head for detecting a magnetic signal on a recording medium as a reproduction signal includes a first magnetic shield, a first electrode terminal disposed on the first magnetic shield, a magnetoresistive film disposed on the first electrode terminal, magnetic domain control films disposed on both sides of the magnetoresistive film for controlling magnetic domains in the magnetoresistive film by applying a bias magnetic field in a first direction to the magnetoresistive film. The magnetoresistive head further includes a second electrode terminal disposed on the magnetoresistive film, and a second magnetic shield disposed on the second electrode terminal. At the time of reproduction of the magnetic signal, a sense current is passed across the first and second electrode terminals in the direction perpendicular to the film plane of the magnetoresistive film so that the direction of a current magnetic field in a medium-opposed end portion of the magnetoresistive film is in the first direction.

## Description

### Technical Field

The present invention relates to a magnetoresistive head for use in magnetic recorders such as magnetic disk drives and magnetic tape devices.

### Background Art

In recent years, attendant on the tendency toward smaller size and higher density of magnetic disk devices, the floating amount of a head slider is reduced, and realization of extremely low floating recording/reproduction or contact recording/reproduction in which the slider makes contact with a recording medium has been desired. In addition, in a conventional magnetic recording head, when the circumferential velocity (the relative velocity between the head and the medium) is reduced due to a reduction in the diameter of the magnetic disk, the reproduction output is deteriorated. In view of this, recently, magnetoresistive heads (MR heads) of which the reproduction output is independent from the circumferential velocity and which can produce a large output even at a low circumferential velocity have been vigorously developed, and have come to constitute a main stream of magnetic heads. Further, at present, magnetic heads utilizing the giant magnetoresistive (GMR) effect are also been commercialized. An increase in recording density of a magnetic disk device leads to a reduction in the recording area per bit and a reduction in the magnetic field generated. While the recording densities of the magnetic disk devices commercialized at present are around 20 Gbit/in², the rise in the recording density is being enlarged by about 2 folds per year. Therefore, a magnetoresistive sensor and a magnetoresistive head that are capable of coping with a finer magnetic field range and capable of sensing small variations in the external magnetic field are demanded.

At present, a spin valve magnetoresistive sensor utilizing the spin valve GMR effect is widely used in magnetic heads. In the magnetoresistive sensor with the spin valve structure, the magnetization direction of a free ferromagnetic layer (free layer) is changed by a signal magnetic field, and the relative angle between this magnetization direction and the magnetization direction of a pinned ferromagnetic layer (pinned layer) is changed, whereby the resistance of the magnetoresistive sensor is changed. Where this magnetoresistive sensor is used in a magnetic head, the magnetization direction of the pinned layer is fixed in the device height direction of the magnetoresistive device, and the magnetization direction of the free layer in the condition where no external magnetic field is applied is generally designed to be in the device width direction orthogonal to the pinned layer. This ensures that the resistance of the magnetoresistive sensor is linearly increased or decreased according as the signal magnetic field direction for the magnetic recording medium is in parallel or antiparallel to the magnetization direction of the pinned layer. Such linear variations facilitate the signal processing of the magnetic disk device.

In the conventional magnetoresistive sensor, a sense current is passed in parallel to the film plane, and a resistance variation due to the external magnetic field is read. In this structure of passing the current in parallel to the GMR film plane (Current in the plane; CIP), the output is lowered when the sense region defined by a pair of electrode terminals is reduced. Besides, in the case of a spin valve magnetoresistive sensor with the CIP structure, an insulation film is required between the GMR film and each of upper and lower magnetic shields. That is to say, (the distance between the magnetic shields) = (the GMR film thickness) + (the insulation film thickness) × 2. The insulation film thickness has a lower limit at about 20 nm at present, so that (the distance between the magnetic shields) = (the GMR film thickness) + about 40 nm. When the length of each record bit on the recording medium is reduced, it is impossible to cope with this, and the demand for reducing the distance between the magnetic shields to 40 nm or below cannot at present be coped with by the CIP spin valve magnetoresistive sensor.

From the foregoing, it is considered that a magnetic head of the CIP structure utilizing the spin valve GMR effect can cope with recording densities of up to 20 to 40 Gbit/in². In addition, it is considered that, even when the specular scattering of the newest technology is applied, a recording density of 60 Gbit/in² is the upper limit. As mentioned above, the enhancement of the recording density of the magnetic disk devices is rapid, and a recording density of 80 Gbit/in² is demanded in the year 2002. At recording densities of 80 Gbit/in² and above, it is very difficult even for the CIP spin valve GMR magnetic head based on the application of the newest specular scattering to cope with the recording densities, from the viewpoints of output and the distance between the magnetic shields. In order to cope with these problems, a GMR and a tunnel MR (TMR) of the structure of passing a current perpendicularly to the GMR film plane (Current Perpendicular to the Plane; CPP) have been proposed as post CIP.

The TMR has a structure including a thin insulation layer sandwiched between two ferromagnetic layers, in which the quantity of a tunnel current flowing through the insulation layer is varied by the magnetization directions of the two ferromagnetic layers. Since the TMR shoes a very large resistance variation and a good sensitivity, the TMR is considered to be promising as post spin valve GMR. The GMR with the CPP structure is characterized in that the output is enlarged when the sectional area of the portion through which the sense current flows of the GMR is reduced. This is a great advantage over the GMR with the CIP structure. Incidentally, the TMR can be considered to be a kind of the CPP structure because a current flows from the ferromagnetic layer on one side across the insulation layer to the ferromagnetic layer on the other side, and the above-mentioned advantage also applies to the TMR.

The MR head using the MR film (hereinafter, the term MR includes the GMR) has the problem that where the MR film is not a single magnetic domain, the Barkfausen noise is generated, to largely vary the reproduction output. Therefore, a magnetic domain control film is provided for controlling the magnetic domains of the MR film. As the magnetic domain control film, high coercive force films such as CoPt and antiferromagnetic films such as PdPtMn can be used.

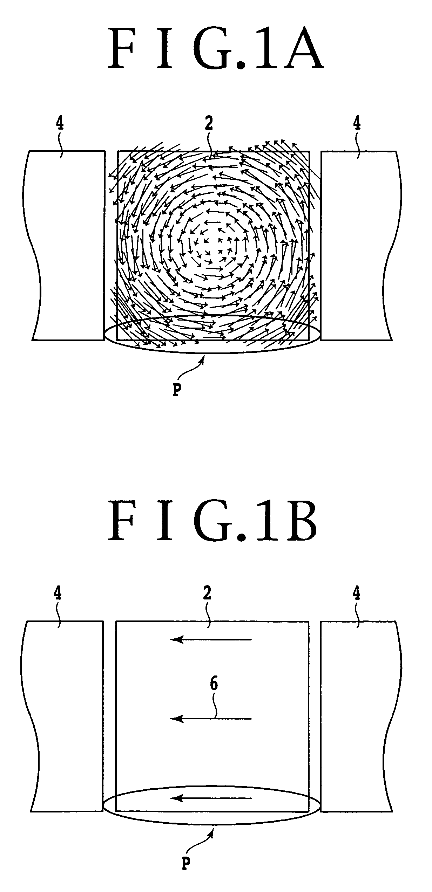

In the MR head with the CPP structure, the sense current is passed in the direction perpendicular to the film plane of the MR film, the current magnetic field due to the sense current is in the direction of whirling in the film plane of the MR film 2 as shown in FIG. 1A. The magnetic domain control films 4 are provided on both side surfaces of the MR film 2. Symbol P denotes a medium-opposed end portion of the free layer. On the other hand, the direction of a bias magnetic field due to the magnetic domain control films 4 for restraining the generation of the magnetic domains in the free layer of the MR film and for stabilizing the magnetization direction is substantially in the track width direction, as indicated by arrow 6 in FIG. 1B.

In this instance, it is known as described in Japanese Patent Laid-open No. 2002-171013 that where a hard magnetic film is used as the magnetic domain control film, the sense current is passed in the medium-opposed end portion (air bearing surface side end portion) of the MR film so that the current magnetic field due to the sense current and the bias magnetic field due to the magnetic domain control films are in opposite directions. Hereinafter, the direction of the sense current such that the current magnetic field and the bias magnetic field are in the opposite directions will be referred to as the negative direction. On the other hand, the direction of the sense current such that the current magnetic field and the bias magnetic field are in the same direction will be referred to as the positive direction. However, when the sense current is passed in the medium-opposed end portion of the MR film so that the current magnetic field and the bias magnetic field are in the opposite directions, the magnetic field applied to the free layer is reduced through mutual canceling of the current magnetic field and the bias magnetic field due to the hard magnetic films in the medium-opposed end portion of the MR film, so that the magnetic domain control effect is reduced although the sensitivity of the magnetoresistive head is enhanced.

Further, where a hard magnetic film is used as the magnetic domain control film, the hard magnetic films are disposed on both sides of the MR film. In the magnetoresistive head with the CPP structure, it is necessary to adopt a structure in which the MR film and the hard magnetic films are separated and insulated from each other so as to prevent the sense current from being shunted to the hard magnetic films. Where the MR film and the hard magnetic films are separated from each other, the bias magnetic field from the hard magnetic films applied to the free layer of the MR film is extremely reduced. Therefore, when the sense current is passed in the negative direction, the magnetic domain control effect of the free layer is further reduced.

### Disclosure of the Invention

Accordingly, it is an object of the present invention to provide a magnetoresistive head capable of enhancing the magnetic domain control effect of a free layer of an MR film and capable of restraining the generation of the Barkhausen noise.

In accordance with one aspect of the present invention, there is provided a magnetoresistive head for detecting a magnetic signal on a recording medium as a reproduction signal comprising: a first magnetic shield; a first electrode terminal disposed on the first magnetic shield; a magnetoresistive film disposed on the first electrode terminal; magnetic domain control films disposed on both sides of the magnetoresistive film, for controlling magnetic domains of the magnetoresistive film by applying a bias magnetic field in a first direction on the magnetoresistive film; a second electrode terminal disposed on the magnetoresistive film; a second magnetic shield disposed on the second electrode terminal; and means for passing a sense current in the direction perpendicular to the film plane of the magnetoresistive film across the first and second electrode terminals so that the direction of a current magnetic field in a medium-opposed end portion of the magnetoresistive film is in the first direction.

Preferably, the magnetoresistive film includes at least one low resistance film, and at least two ferromagnetic films sandwiching the low resistance film therebetween. Alternatively, the magnetoresistive film has a ferromagnetic tunnel junction structure, or is composed of a multi-layer film structure of a ferromagnetic film or films and a nonmagnetic film or films. Preferably, the magnetic domain control film is composed of a high coercive force film. At least one of the first and second electrode terminals may function also as a magnetic shield.

In accordance with another aspect of the present invention, there is provided a magnetoresistive head for detecting a magnetic signal on a recording medium as a reproduction signal comprising: a first magnetic shield; a first electrode terminal disposed on the first magnetic shield; a magnetoresistive film disposed on the first electrode terminal; a magnetic domain control film disposed on the magnetoresistive film, for controlling magnetic domains of the magnetoresistive film by applying a bias magnetic field in a first direction on the magnetoresistive film; a second electrode terminal disposed on the domain control film; a second magnetic field disposed on the second electrode terminal; and means for passing a sense current in the direction perpendicular to the film plane of the magnetoresistive film across the first and second electrode terminal so that the direction of a current magnetic field in a medium-opposed end portion of the magnetoresistive film is in the first direction.

Preferably, the magnetic domain control film includes a nonmagnetic metal layer laminated on the magnetoresistive film, a ferromagnetic layer laminated on the nonmagnetic metal layer, and an antiferromagnetic layer laminated on the ferromagnetic layer. At least one of the first and second electrode terminals may function also as a magnetic shield.

In accordance with a further aspect of the present invention, there is provided a magnetoresistive head for detecting a magnetic signal on a recording medium as a reproduction signal comprising: a first magnetic shield; a first electrode terminal disposed on the first magnetic shield; a domain control film disposed on the first electrode terminal; a magnetoresistive film disposed on the domain control film; a second electrode terminal disposed on the magnetoresistive film; a second magnetic shield disposed on the second electrode terminal; and means for passing a sense current in the direction perpendicular to the film plane of the magnetoresistive film across the first and second electrode terminals so that the direction of a current magnetic field in a medium-opposed end portion of the magnetoresistive film is in the same direction as the direction of a bias magnetic field generated in the magnetoresistive film by the domain control film.

Preferably, the magnetic domain control film includes an antiferromagnetic layer laminated on the first electrode terminal, a ferromagnetic layer laminated on the antiferromagnetic layer, and a nonmagnetic metal layer laminated on the ferromagnetic layer. At least one of the first and second electrode terminals functions also as a magnetic shield.

### Brief Description of the Drawings

FIG. 1A is a diagram showing the distribution of a current magnetic field in a magnetoresistive head with the CPP structure according to the related art using a hard magnetic film as a magnetic domain control film;
FIG. 1B is a diagram showing the direction of a bias magnetic field due to the hard magnetic film in the magnetoresistive head with the CPP structure according to the related art;
FIG. 2 is a general perspective view of a magnetoresistive head according to a first embodiment of the present invention;
FIG. 3A is a diagram showing the distribution of a current magnetic field in the magnetoresistive head according to the first embodiment;
FIG. 3B is a diagram showing the direction of a bias magnetic field due to a hard magnetic film in the magnetoresistive head according to the first embodiment;
FIG. 4A is a diagram showing an isolated reproduction wave type in the case where a sense current is passed in the positive direction;
FIG. 4B is a diagram showing an isolated reproduction wave type in the case where a sense current is passed in the negative direction;
FIGS. 5A to 9C are diagrams for illustrating a process of manufacturing the magnetoresistive head according to the first embodiment of the present invention;
FIG. 10 is a general perspective view of a magnetoresistive head according to a second embodiment of the present invention;
FIG. 11 is a general perspective view of a magnetoresistive head according to a third embodiment of the present invention;
FIG. 12A is a diagram showing the distribution of a current magnetic field in the magnetoresistive head according to the second embodiment of the present invention;
FIG. 12B is a diagram showing the direction of a bias magnetic field due to an antiferromagnetic film in the magnetoresistive head according to the second embodiment; and
FIGS. 13A to 17C are diagrams for showing a process of manufacturing the magnetoresistive head according to the second embodiment of the present invention.

### Best Mode for Carrying out the Invention

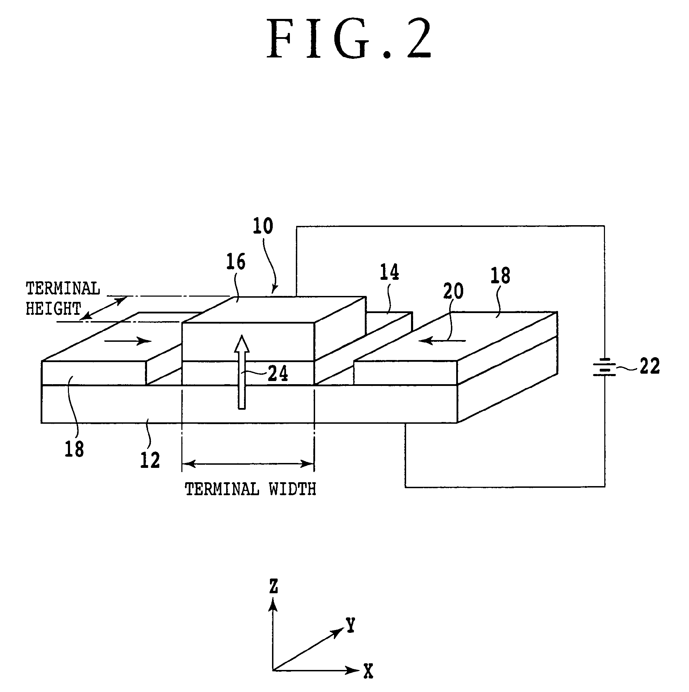

Now, some embodiments of the present invention will be described below, referring to the drawings. In the description of the embodiments, substantially the same components will be denoted by the same symbols. Referring to FIG. 2, a general perspective view of a magnetoresistive head 10 according to a first embodiment of the present invention is shown. In FIG. 2, upper and lower magnetic shields are omitted.

Symbol 12 denotes a lower electrode terminal which is formed of Cu or a combination of Cu and Au and which has a first width in the X direction. A magnetoresistive film (MR film) 14 is laminated on the lower electrode terminal 12. The MR film 14 has a second width smaller than the first width. Magnetic domain control films 18 are disposed respectively on both sides of the MR film 14. The MR film 14 and each of the magnetic domain control films 18 are disposed with a predetermined gap therebetween, whereby shunt currents from the MR film 14 into the magnetic domain control films 18 are prevented from being generated. As the magnetic domain control film 18, a high coercive force film such as CoCrPt can be used.

An upper electrode terminal 16 formed of Cu or a combination of Cu and Au is laminated on the MR film 14. The upper electrode terminal 16 has a second width substantially equal to the width of the MR film 14. Of the MR film 14, the portion not covered with the upper electrode terminal 16 functions as a back yoke for guiding a magnetic flux. While the width of the upper electrode terminal 16 is substantially equal to the width of the MR film 14 in the magnetoresistive head 10 according to this embodiment, the width of the lower electrode terminal 12 is greater than the width of the MR film 14. Therefore, concentration of the sense current occurs in the vicinity of both side portions of the MR film 14, so that the cross-sectional area of the sense current flowing through the MR film 14 can be reduced. As a result, a high reproduction output can be obtained. The width of the upper electrode terminal 16 may be set smaller than the width of the MR film 14.

The MR film 14 includes at least one low resistance film and at least two ferromagnetic films sandwiching the low resistance film therebetween. Alternatively, the MR film 14 has a ferromagnetic tunnel junction structure, or is composed of a multi-layer film structure of a ferromagnetic layer or layers and a nonmagnetic layer or layers. In other words, as the MR film 14, there can be used a spin valve GMR film such as NiFe/Cu/NiFe/IrMn, a laminated ferri-spin valve GMR film such as NiFe/Cu/CoFeB/Ru/CoFeB/PdPtMn, and a tunnel junction type MR film (TMR film) such as NiFe/Al₂O₃/NiFe/PdPtMn.

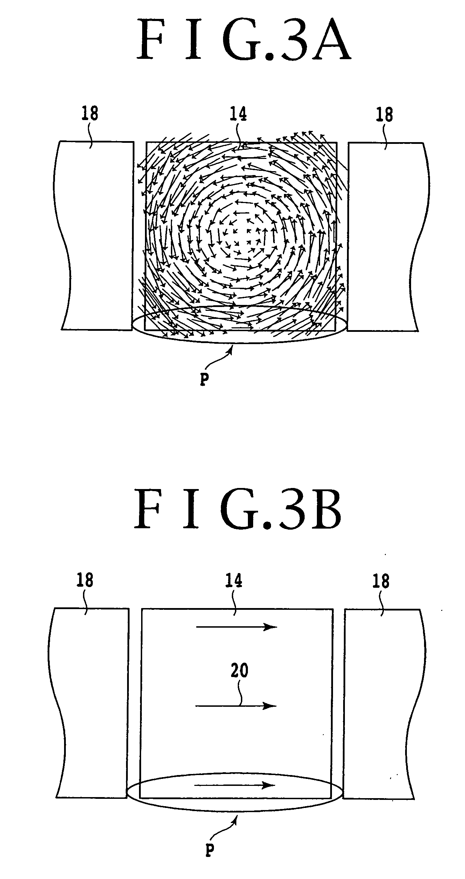

The magnetic domain control film 18 is so magnetized as to apply a bias magnetic field in the direction of arrow 20. Further, in the magnetoresistive head 10 according to this embodiment, a power source 22 passes a sense current across the electrode terminals 12 and 16 in the direction of arrow 24, which is the direction perpendicular to the film plane of the MR film 14. The direction of the sense current is important, and will be further described referring to FIGS. 3A and 3B. As shown in FIG. 3A, in the magnetoresistive head with the CPP structure, the sense current is passed in the direction perpendicular to the film plane of the MR film 14, so that a current magnetic field due to the sense current is in the direction of whirling in the film plane of the MR film 14. In FIG. 3A, arrow P indicates a medium-opposed end portion of a free layer of the MR film 14. As shown in FIG. 3B, the direction of the bias magnetic field due to the magnetic domain control films 18 is in the direction indicated by arrow 20. In this embodiment, the sense current is passed in across the lower electrode terminal 12 and the upper electrode terminal 16 in the direction perpendicular to the film plane of the MR film 14, i.e., in the direction of arrow 24 (positive direction) in Fig. 2. The direction 20 of the bias magnetic field coincides with the direction of the current magnetic field in the medium-opposed end portion P of the MR film 14.

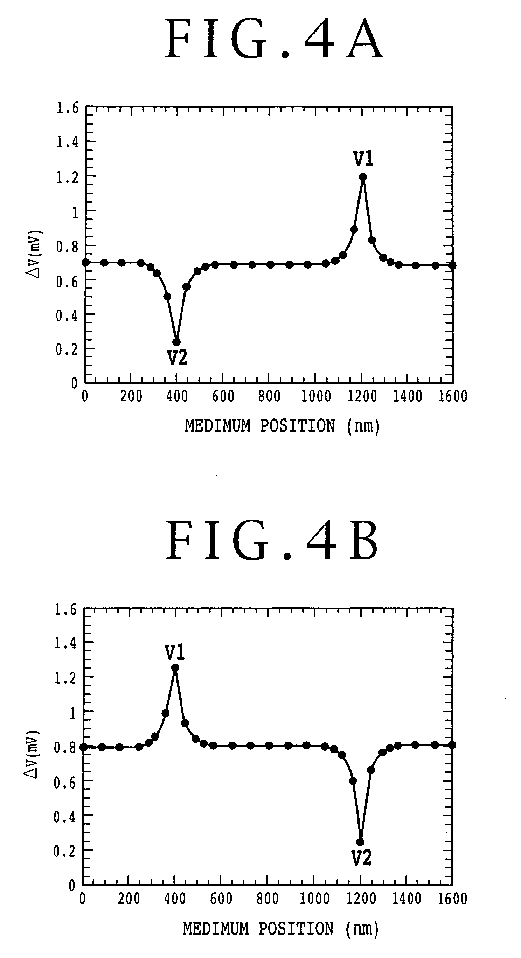

FIG. 4A shows an isolated reproduction wave type in the case where the sense current is passed in the positive direction, while FIG. 4B shows an isolated reproduction wave type in the case where the sense current is passed in the negative direction. Here, the asymmetry of the reproduction wave type can be represented by (V1 - V2)/(V1 + V2) × 100 (%), and when the sense current was passed in the positive direction, the asymmetry of the reproduction wave type was 5.6% as shown in FIG. 4A. When the sense current was passed in the negative direction, the asymmetry of the reproduction wave type was 7.4% as shown in FIG. 4B. The sense current with the positive direction more improves the asymmetry of the reproduction wave than that of the negative direction. In this embodiment, the sense current is passed so that the current magnetic field and the bias magnetic field due to the magnetic domain control films 18 are in the same direction in the medium-opposed end portion of the free layer, it is possible to enhance the magnetic domain control effect of the free layer and to restrain the generation of the Barkhausen noise. As a result, a good reproduction signal can be obtained.

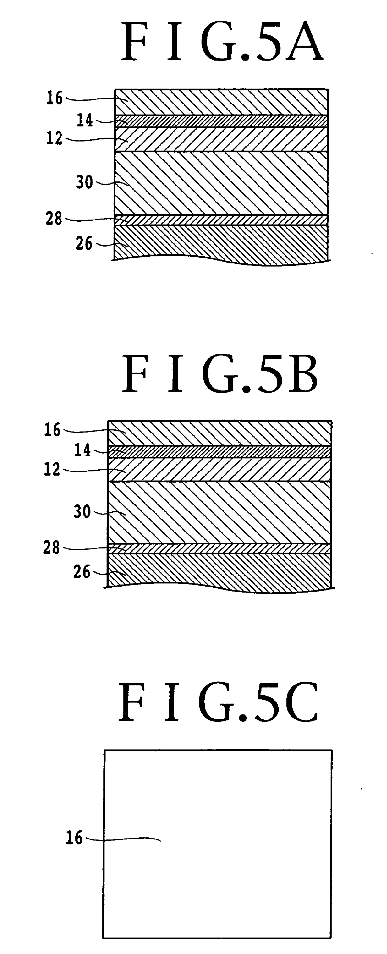

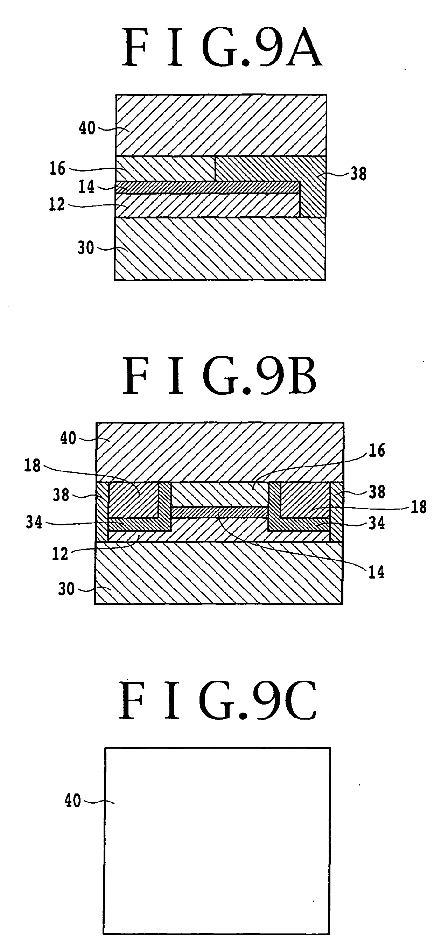

Now, referring to FIGS. 5A to 9C, a process of manufacturing the magnetoresistive head 10 according to the first embodiment will be described. FIGS. 5A to 9A are sectional views in the MR device height direction at a central portion with respect to the terminal width, FIGS. 5B to 9B are sectional views in the MR device width direction (track width direction) at a central portion with respect to the terminal height, and FIGS. 5C to 9C are plan views of FIGS. 5B to 9B. First, as shown in FIGS. 5A and 5B, an under layer 28 formed of Al₂O₃, a lower magnetic shield 30 formed of NiFe, a lower electrode terminal 12, an MR film 14, and an upper electrode terminal 16 are sequentially formed on an Al₂O₃-TiC substrate 26. Here, the lower electrode terminal 12 may be omitted and the lower magnetic shield 30 may function also as the lower electrode terminal.

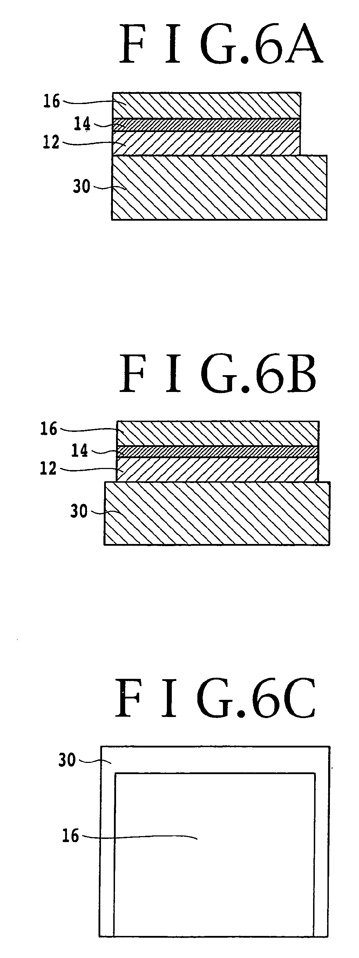

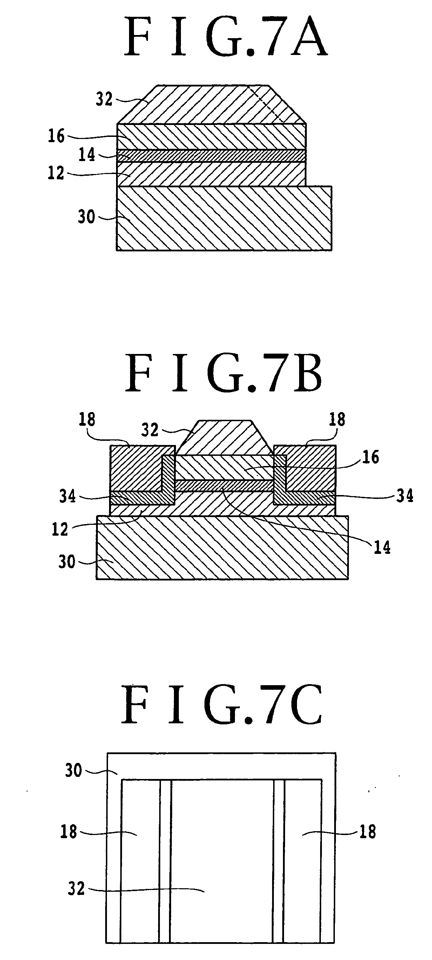

Next, as shown in FIGS. 6A to 6C, the lower electrode terminal 12, the MR film 14, and the upper electrode terminal 16 are patterned into a desired shape. Next, a photoresist 32 is applied uniformly, and then the photoresist 32 is patterned into a desired shape. In this instance, the photoresist 32 may be smaller than the upper electrode terminal 16 in height direction size as indicated by dotted line in FIG. 7A. Parts of the MR film 14 and the lower electrode terminal 12 are etched by ion milling or the like, using the photoresist 32 as a mask. In this instance, the etching is desirably so conducted that the surface position of the magnetic domain control films 18 to be formed later will be above or flush with the lower portion position of the upper electrode terminal 16 and that the lower portion position of the magnetic domain control films 18 will be below or flush with the lower portion position of the MR film 14. Where the surface position of the magnetic domain control films 18 is above or flush with the lower portion position of the upper electrode terminal 16 and the lower position of the magnetic domain control films 18 is below or flush with the lower portion position of the MR film 14, it is unnecessary to perform the etching to the lower electrode terminal 12. Where the photoresist 32 is in the dotted-line position as shown in FIG. 7A, the height of the MR film 14 may be smaller than the height of the lower electrode terminal 12 in the height direction.

Next, as shown in FIGS. 7A to 7C, a nonmagnetic insulation film 34 is formed, without removing the photoresist 32. As the insulation film, Al₂O₃ and the like can be used. Subsequently, magnetic domain control films 18 are formed, without removing the photoresist 32. As the magnetic domain control film 18, a high coercive force film such as CoCrPt can be used.

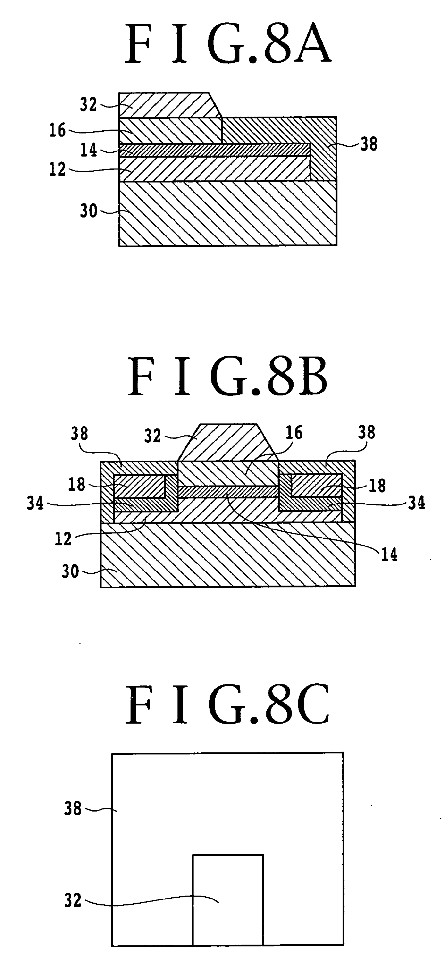

Next, the photoresist 32 is patterned into a desired shape. The width of the photoresist 32 is set equal to or smaller than the width of the upper electrode terminal 16. Subsequently, the upper electrode terminal 16 is etched by ion milling or the like, using the photoresist 32 as a mask. In this instance, where the width of the photoresist 32 is smaller than the width of the upper electrode terminal 16, the width of the upper electrode terminal 16 becomes smaller than that of the MR film 14. Since reproduction characteristics are not thereby influenced greatly or the resolution in the track width direction is enhanced, good reproduction characteristics can be obtained. Next, an insulation film 38 is formed. This condition is shown in FIGS. 8A to 8C.

Subsequently, the photoresist 32 is removed, and the insulation film 38 and the upper electrode terminal 16 are etched by ion milling or the like. Here, where etching is not used, a method may be adopted in which, before the formation of the insulation film 38 formed in FIGS. 8A to 8C, the photoresist 32 is patterned so as to cover the magnetic domain control film 18, the upper electrode terminal 16, and the insulation film 34 with the photoresist 32, and then the insulation film 38 is formed. Besides, where the magnetic domain control film 18 and the upper magnetic shield 40 are not made to make contact with each other, the etching of the insulation film 38 and the upper electrode terminal 16 by ion milling or the like is not needed. Next, an upper magnetic shield 40 formed of NiFe is formed as shown in FIGS. 9A to 9C.

The magnetic shields 30, 40 and the electrode terminals 12, 16 are formed by plating or vapor deposition, whereas the MR film 14, the magnetic domain control films 18, and the insulation films 34, 38 are formed by sputtering or the like. In the magnetoresistive head 10 described above, the magnetic domain control films 18 may make electrical contact with one of the magnetic shields 30, 40 or with one of the electrode terminals 12, 16, but must not make electrical contact with both the electrodes 12, 16 or with both the magnetic shields 30, 40 functioning also as electrodes.

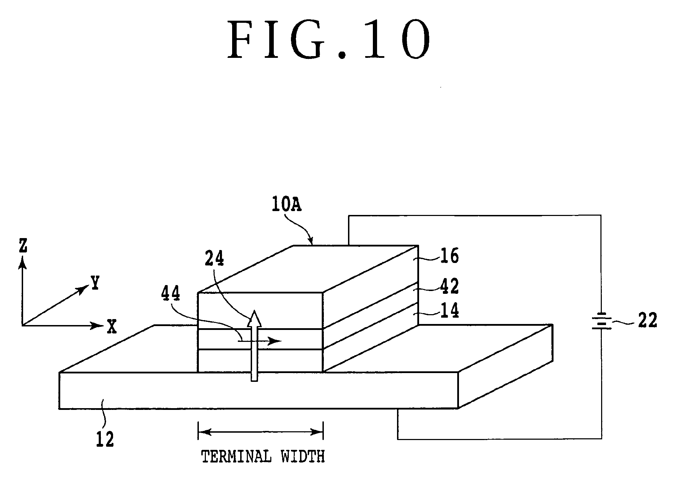

Referring to FIG. 10, a general perspective view of a magnetoresistive head 10A according to a second embodiment of the present invention is shown. In FIG. 10, upper and lower magnetic shields are omitted. In the magnetoresistive head 10A in this embodiment, a magnetic domain control film 42 is disposed on an MR film 14, and an upper electrode terminal 16 is disposed on the magnetic domain control film 42. The MR film 14 has a free layer located on the upper side. The magnetic domain control film 42 includes a nonmagnetic metal layer of Ta, Cu, or the like laminated on the free layer of the MR film 14, a ferromagnetic layer of CoFeB, NiFe, or the like laminated on the nonmagnetic metal layer, and an antiferromagnetic layer of PdPtMn laminated on the ferromagnetic layer.

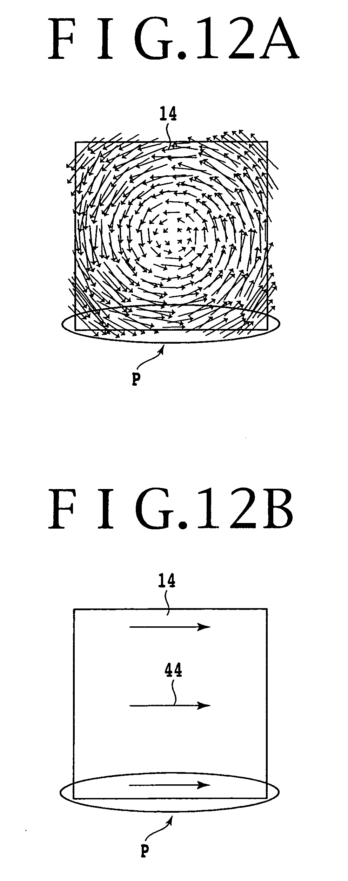

Arrow 44 in FIG. 10 indicates the direction of a bias magnetic field due to the antiferromagnetic layer. A sense current is passed in the direction perpendicular to the film plane of the MR film 14, i.e., in the direction of arrow 24. The direction of a current magnetic field in a medium-opposed end portion P of the MR film 14 shown in FIG. 12A coincides with the direction 44 of the bias magnetic field shown in FIG. 12B. Also in this embodiment, like in the above-described first embodiment, the magnetic domain control effect of the free layer of the MR film 14 can be enhanced, and the generation of the Barkhausen noise can be restrained. As a result, a good reproduction signal can be obtained.

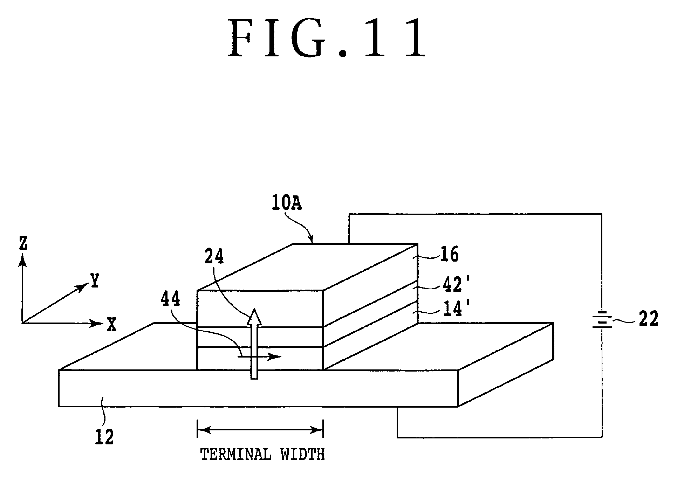

FIG. 11 shows a general perspective view of a magnetoresistive head 10B according to a third embodiment of the present invention. In the magnetoresistive head 10B according to this embodiment, a magnetic domain control film 42' is disposed between a lower electrode terminal 12 and an MR film 14'. The MR film 14' has a free layer on the lower side. The magnetic domain control film 42' includes an antiferromagnetic layer of PdPtMn or the like laminated on the lower electrode terminal 12, a ferromagnetic layer of CoFeB, NiFe, or the like laminated on the antiferromagnetic layer, and a nonmagnetic metal layer of Ta, Cu, or the like laminated on the ferromagnetic layer. Also in this embodiment, like in the first and second embodiments, a sense current is passed so that the direction of a current magnetic field in a medium-opposed end portion P of the MR film 14' coincides with the direction of a bias magnetic field in the MR film 14', it is possible to enhance the magnetic domain control effect of the MR film 14' and to restrain the generation of the Barkhausen noise. As a result, a good reproduction signal can be obtained.

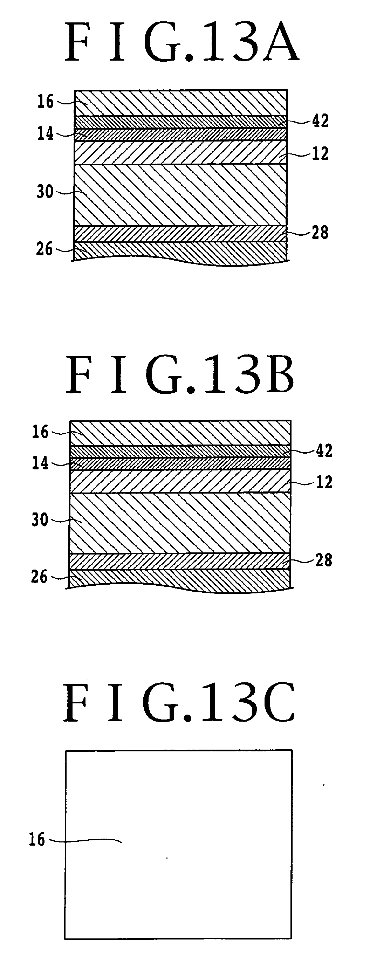

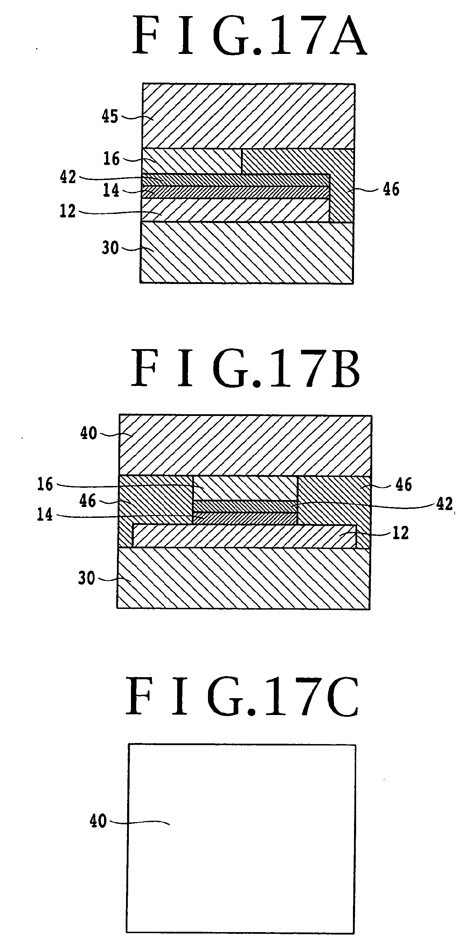

Next, referring to FIGS. 13A to 17C, a process of manufacturing the magnetoresistive head 10A according to the second embodiment will be described. FIGS. 13A to 17A are sectional views in the MR device height direction at a central portion with respect to the terminal width, FIGS. 13B to 17B are sectional views in the MR device width direction (track width direction) at a central portion with respect to the terminal height, and FIGS. 13C to 17C are plan views of FIGS. 13B to 17B. First, as shown in FIGS. 13A and 13B, an under layer 28 formed of Al₂O₃, a lower magnetic shield 30 formed of NiFe, a lower electrode terminal 12, a MR film 14, a laminated film (magnetic domain control film) 42, and an upper electrode terminal 16 are sequentially formed on an Al₂O₃-TiC substrate 26. The laminated film 42 includes a nonmagnetic metal layer of Ta, Cu, or the like and a ferromagnetic layer of CoFeB, NiFe, or the like and an antiferromagnetic layer of PdPtMn or the like.

In this instance, the laminated film (magnetic domain control film) 42 of the (nonmagnetic metal layer)/(ferromagnetic layer)/(antiferromagnetic layer) is so formed that the free layer of the MR film and the nonmagnetic metal layer are in laminated condition; for example, where the free layer is on the lower side in the MR film, the laminated film is so formed as to achieve sequential lamination in the manner of the (antiferromagnetic layer)/(ferromagnetic layer)/(nonmagnetic metal layer)/(free layer of MR film). On the contrary, where the free layer is on the upper side in the MR film, the laminated film is so formed as to achieve sequential lamination in the manner of the (free layer of MR film)/(nonmagnetic metal layer)/(ferromagnetic layer)/(antiferromagnetic layer). In this embodiment, the case where the free layer is on the upper side in the MR film will be described. Here, a structure may be adopted in which the lower electrode terminal 12 is not formed and the lower magnetic shield 30 functions also as the lower electrode terminal.

The MR film 14 includes at least one low resistance film and at least two ferromagnetic films sandwiching the low resistance film therebetween. Alternatively, the MR film 14 has a ferromagnetic tunnel junction structure or is composed of a multi-layer film structure of a ferromagnetic layer or layers and a nonmagnetic layer or layers. In other words, as the MR film 14, there can be used a spin valve GMR film of NiFe/Cu/NiFe/IrMn or the like, a laminated ferri-spin valve GMR film of NiFe/Cu/CoFeB/Ru/CoFeB/PdPtMn or the like, and a tunnel junction type MR film (TMR film) of NiFe/Al₂O₃/NiFe/PdPtMn or the like.

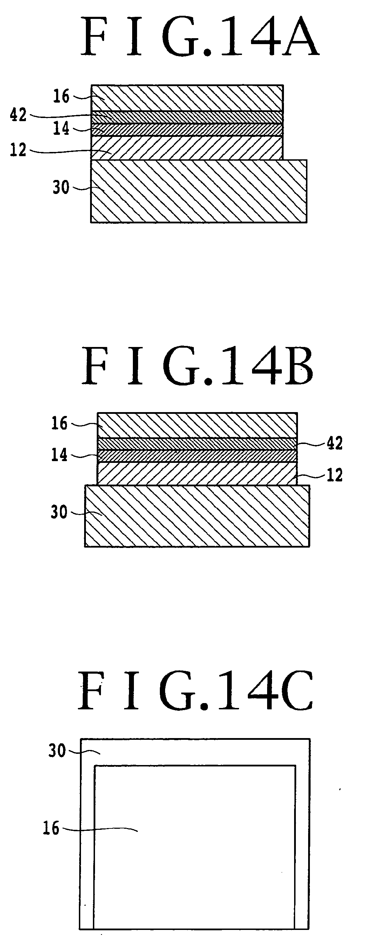

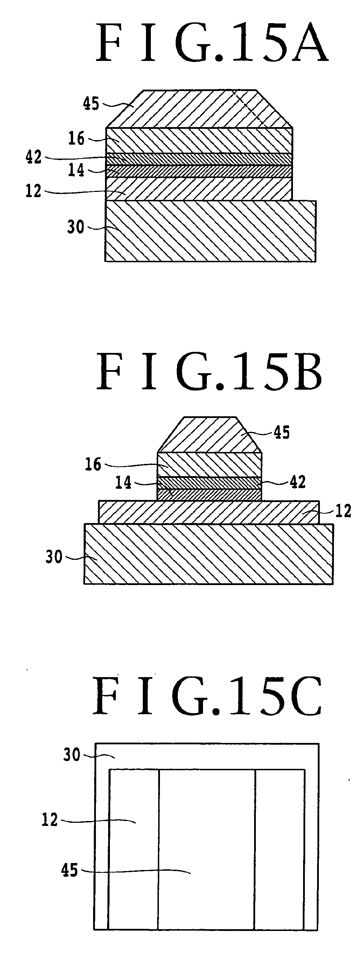

Next, as shown in FIGS. 14A to 14C, the lower electrode terminal 12, the MR film 14, the magnetic domain control film 42, and the upper electrode terminal 16 are patterned into a desired shape. Subsequently, a photoresist 45 is applied uniformly, and then the photoresist 45 is patterned into a desired shape. In this instance, the photoresist 45 may be smaller than the upper electrode terminal 16 in height direction size as indicated by dotted line in FIG. 15A. The upper electrode terminal 16, the magnetic domain control film 42, the MR film 14, and the lower electrode terminal 12 are etched by ion milling or the like, using the photoresist 45 as a mask. Where the photoresist 45 is in the dotted-line position in FIG. 15A, the height of the MR film 14 may be smaller than the height of the lower electrode terminal 12 in the height direction.

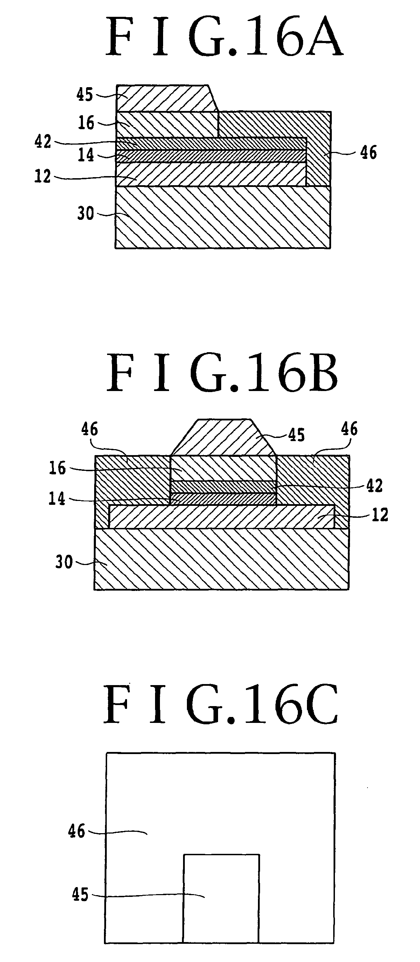

Subsequently, the photoresist 45 is patterned into a desired shape. The width of the photoresist 45 is set equal to or smaller than the width of the upper electrode terminal 16. Next, the upper electrode terminal 16 is etched by ion milling or the like, using the photoresist 45 as a mask. In this instance, where the width of the photoresist 45 is smaller than the width of the upper electrode terminal 16, the width of the upper electrode terminal 16 is smaller than that of the MR film 14. Since reproduction characteristics are not influenced largely or the resolution in the track width direction is enhanced, good reproduction characteristics can be obtained. Next, an insulation film 46 is formed. This condition is shown in FIGS. 16A to 16C. Subsequently, the photoresist 45 is removed, and then an upper magnetic shield 40 of NiFe is formed as shown in FIGS. 17A to 17C.

The magnetic shields 30, 40 and the electrode terminals 12, 16 are formed by plating or vapor deposition, whereas the MR film 14, the magnetic domain control film (laminated film) 42, and the insulation film4 6 are formed by sputtering or the like. In the magnetoresistive head 10A according to this embodiment, there are used two antiferromagnetic layers, namely, an antiferromagnetic layer for fixing the magnetization of the ferromagnetic layer relative to the free layer in the MR film 14, and an antiferromagnetic layer for giving a bias magnetic field to the free layer of the MR film. In this instance, the magnetization fixing directions of the two antiferromagnetic layers differ by about 90 degrees. Therefore, in forming the two antiferromagnetic layers, it suffices to change the magnetization fixing direction by about 90 degrees by changing the applied magnetic field by about 90 degrees during a heat treatment, by using materials differing in blocking temperature.

### Industrial Applicability

According to the present invention, in a magnetoresistive head with a CPP structure, a sense current is passed so that the direction of a current magnetic field in a medium-opposed end portion of a free layer of an MR film coincides with the direction of a bias magnetic field due to a magnetic domain control film. It is possible to enhance the magnetic domain control effect of the free layer and to restrain the generation of the Barkhausen noise. As a result, a good reproduction signal can be obtained.

## Claims

1. A magnetoresistive head for detecting a magnetic signal on a recording medium as a reproduction signal, said magnetoresistive head comprising:
a first magnetic shield;
a first electrode terminal disposed on said first magnetic shield;
a magnetoresistive film disposed on said first electrode terminal;
magnetic domain control films disposed on both sides of said magnetoresistive film, for controlling magnetic domains of said magnetoresistive film by applying a bias magnetic field in a first direction on said magnetoresistive film;
a second electrode terminal disposed on said magnetoresistive film;
a second magnetic shield disposed on said second electrode terminal; and
means for passing a sense current in the direction perpendicular to the film plane of said magnetoresistive film across said first and second electrode terminals so that the direction of a current magnetic field in a medium-opposed end portion of said magnetoresistive film is in said first direction.

2. The magnetoresistive head as set forth in claim 1, wherein said magnetoresistive film includes at least one low resistance film, and at least two ferromagnetic films sandwiching said low resistance film therebetween, and the electric resistance of said magnetoresistive film is varied by a magnetic field.

3. The magnetoresistive head as set forth in claim 1, wherein said magnetoresistive film has a ferromagnetic tunnel junction structure, and the electric resistance of said magnetoresistive film is varied by a magnetic field.

4. The magnetoresistive head as set forth in claim 1, wherein said magnetoresistive film is comprised of a multi-layer film structure of a ferromagnetic layer and a nonmagnetic layer, and the electric resistance of said magnetoresistive film is varied by a magnetic field.

5. The magnetoresistive head as set forth in claim 1, wherein said first electrode terminal has a first width, said magnetoresistive film has a second width not more than said first width, and said second electrode terminal has a third width not more than said second width.

6. The magnetoresistive head as set forth in claim 1, wherein said domain control film is comprised of a high coercive force film.

7. A magnetoresistive head for detecting a magnetic signal on a recording medium as a reproduction signal, said magnetoresistive head comprising:
a first electrode terminal;
a magnetoresistive film disposed on said first electrode terminal;
magnetic domain control films disposed on both sides of said magnetoresistive film, for controlling magnetic domains of said magnetoresistive film by applying a bias magnetic field in a first direction on said magnetoresistive film;
a second electrode terminal disposed on said magnetoresistive film; and
means for passing a sense current in the direction perpendicular to the film plane of said magnetoresistive film across said first and second electrode terminals so that the direction of a current magnetic field in a medium-opposed end portion of said magnetoresistive film is in said first direction.

8. The magnetoresistive head as set forth in claim 7, wherein at least one of said first and second electrode terminals functions also as a magnetic shield.

9. A magnetoresistive head for detecting a magnetic signal on a recording medium as a reproduction signal, said magnetoresistive head comprising:
a first magnetic shield;
a first electrode terminal disposed on said first magnetic shield;
a magnetoresistive film disposed on said first electrode terminal;
a magnetic domain control film disposed on said magnetoresistive film, for controlling magnetic domains of said magnetoresistive film by applying a bias magnetic field in a first direction on said magnetoresistive film;
a second electrode terminal disposed on said domain control film;
a second magnetic shield disposed on said second electrode terminal; and
means for passing a sense current in the direction perpendicular to the film plane of said magnetoresistive film across said first and second electrode terminal so that the direction of a current magnetic field in a medium-opposed end portion of said magnetoresistive film is in said first direction.

10. The magnetoresistive head as set forth in claim 9, wherein said domain control film includes a nonmagnetic metal layer laminated on said magnetoresistive film, a ferromagnetic film laminated on said nonmagnetic metal layer, and an antiferromagnetic layer laminated on said ferromagnetic layer.

11. The magnetoresistive head as set forth in claim 9, wherein said magnetoresistive film includes at least one low resistance film, and at least two ferromagnetic films sandwiching said low resistance film therebetween, and the electric resistance of said magnetoresistive film is varied by a magnetic field.

12. The magnetoresistive head as set forth in claim 9, wherein said magnetoresistive film has a ferromagnetic tunnel junction structure, and the electric resistance of said magnetoresistive film is varied by a magnetic field.

13. The magnetoresistive head as set forth in claim 9, wherein said magnetoresistive film is comprised of a multi-layer structure of a ferromagnetic layer and a nonmagnetic layer, and the electric resistance of said magnetoresistive film is varied by a magnetic field.

14. The magnetoresistive head as set forth in claim 9, wherein said first electrode terminal has a first width, said magnetoresistive film has a second width not more than said first width, and said second electrode terminal has a third width not more than said second width.

15. A magnetoresistive head for detecting a magnetic signal on a recording medium as a reproduction signal, said magnetoresistive head comprising:
a first electrode terminal;
a magnetoresistive film disposed on said first electrode terminal;
a domain control film disposed on said magnetoresistive film, for controlling domains of said magnetoresistive film by applying a bias magnetic field in a first direction on said magnetoresistive film;
a second electrode terminal disposed on said domain control film; and
means for passing a sense current in the direction perpendicular to the film plane of said magnetoresistive film across said first and second electrode terminals so that the direction of a current magnetic field in a medium-opposed end portion of said magnetoresistive film is in said first direction.

16. The magnetoresistive head as set forth in claim 15, wherein at least one of said first and second electrode terminals functions also as a magnetic shield.

17. A magnetoresistive head for detecting a magnetic signal on a recording medium as a reproduction signal, said magnetoresistive head comprising:
a first magnetic shield;
a first electrode terminal disposed on said first magnetic shield;
a domain control film disposed on said first electrode terminal;
a magnetoresistive film disposed on said domain control film;
a second electrode terminal disposed on said magnetoresistive film;
a second magnetic shield disposed on said second electrode terminal; and
means for passing a sense current in the direction perpendicular to the film plane of said magnetoresistive film across said first and second electrode terminals so that the direction of a current magnetic field in a medium-opposed end portion of said magnetoresistive film is in the same direction as the direction of a bias magnetic field generated in said magnetoresistive film by said domain control film.

18. The magnetoresistive head as set forth in claim 17, wherein said domain control film includes an antiferromagnetic layer laminated on said first electrode terminal, a ferromagnetic layer laminated on said antiferromagnetic layer, and a nonmagnetic metal layer laminated on said ferromagnetic layer.

19. A magnetoresistive head for detecting a magnetic signal on a recording medium as a reproduction signal, said magnetoresistive head comprising:
a first electrode terminal;
a domain control film disposed on said first electrode terminal;
a magnetoresistive film disposed on said domain control film;
a second electrode terminal disposed on said domain control film; and
means for passing a sense current in the direction perpendicular to the film plane of said magnetoresistive film across said first and second electrode terminals so that the direction of a current magnetic field in a medium-opposed end portion of said magnetoresistive film is in the same direction as the direction of a bias magnetic field generated in said magnetoresistive film by said domain control film.

20. The magnetoresistive head as set forth in claim 19, wherein at least one of said first and second electrode terminal functions also as a magnetic shield.
